# EUROPEAN PATENT SPECIFICATION

(11) **EP 4 574 431 B1**
(45) Date of publication and mention of the grant of the patent: **17.06.2026**
(21) Application number: 23218438.2
(22) Date of filing: 20.12.2023
(51) Int. Cl.: B41F 16/00, B32B 38/18, B41F 19/00, B44C 1/14

(54) **CARDBOARD PROCESSING MACHINE AND METHOD FOR ATTACHING A FOIL TAPE TO A CARDBOARD**
KARTONVERARBEITUNGSMASCHINE UND VERFAHREN ZUM BEFESTIGEN EINES FOLIENBANDES AN EINEM KARTON
MACHINE POUR LE TRAITEMENT DU CARTON ET MÉTHODE POUR ATTACHER UNE BANDE MÉTALLISÉE À UN CARTON

(43) Date of publication of application: 25.06.2025
(73) Proprietor: BOBST MEX SA, 1031 Mex (CH)
(72) Inventor: RUCHET, Christophe, 1028 Préverenges (CH); VOLLMER, Christoph, 1800 Vevey (CH); MORELLI, Sandro, 1020 Renens (CH)
(74) Representative: Hasler, David

(56) References cited:
- EP-B1- 3 946 966
- CN-U- 211 054 637
- US-B2- 9 579 914

## Description

The invention refers to a cardboard processing machine and a method for attaching a foil tape to a cardboard in a cardboard processing machine.

A respective cardboard processing machine comprises a cardboard conveying device, a foil tape conveying device, and a pressing station, wherein the cardboard conveying device is configured to convey cardboard such that it passes through the pressing station and the foil tape conveying device is configured to convey a foil tape such that it passes through the pressing station.

In the pressing station, a metal layer of foil tape is attached to a cardboard, in particular by applying heat and pressure on the respective location where the foil shall be attached to the cardboard. For example, a stamp is used to press the foil tape on the cardboard in the respective area to create a logo or a highlight on the cardboard. Thus, part of the metal layer is transferred to the cardboard, and part of the metal layer remains on the plastic carrier of the foil tape.

To achieve an accurate depiction of the cardboard, the foil tape has to be accurately positioned in the cardboard processing machine. Otherwise, a respective logo or highlight on the cardboard will be misaligned or insufficiently depicted.

To ensure an accurate alignment of the foil tape throughout the cardboard processing machine, it is a known solution to install rulers in the cardboard processing machine which have a marking that indicates a target position of the foil tape, in particular at several locations in the cardboard processing machine.

However, this solution is disadvantageous with regard to the setup time of the machine. In particular, for each production job that requires a different position of the foil tape, the rulers in the machine have to be exchanged. Also, this solution is prone to errors, because the rulers might be mixed up.

Another cardboard processing machine according to the prior art is disclosed in EP 3 946 966 B1. It discloses a hot foil stamping press having a pressing system for pressing a foil onto a sheet, a blow unit which is positioned at a distance to the pressing system for directing a stream of gas between the sheet and the foil. The stream of gas detaches the foil from the sheet after each stamping cycle. A gripper bar is arranged between the blow unit and the pressing system for gripping the sheet. A flow guiding element is arranged between the blow unit and the pressing system, preferably on the gripper bar, for directing the gas from the blow unit between the sheet and the foil. Said element avoids the losses in the stream of gas due to the aperture that exists between the grippers in a typical gripper bar.

It is thus an object of the present invention to provide an optimized solution for aligning a foil tape in a cardboard processing machine.

This object is achieved by a cardboard processing machine comprising a cardboard conveying device, a foil tape conveying device, and a pressing station, wherein the cardboard conveying device is configured to convey cardboard such that it passes through the pressing station and the foil tape conveying device is configured to convey a foil tape such that it passes through the pressing station. The pressing station is configured to press foil tape onto the cardboard such that the foil tape is attached to the cardboard. To be more specific, a typical foil tape has a carrier layer made of plastic, a wax layer, a metal layer, and a thermal-sensitive glue layer. When heated and pressed, the metal is glued on the cardboard, while the wax is melted and releases the metal from the carrier layer. Thus, the metal layer is transferred to the cardboard at the pressing locations, thereby creating the desired metalized pattern on the cardboard, while the carrier layer continues its path toward the waste container. The cardboard processing machine comprises at least one projection device that is arranged above the foil tape conveying device, wherein the cardboard processing machine comprises a control unit that is configured to control the projection device to project a position marking on the components of the foil tape conveying device that indicates the transverse target position of the foil tape.

By means of the projection device, a simple solution for indicating a target position of the foil tape is provided.

For example, the projection device indicates the complete path of each foil tape. Thereby, the foil tape can be aligned particularly accurately. In particular, the alignment of the foil tape can be made at different positions along a conveying direction of the foil tape.

The control unit is for example connected to a cloud computer such that the setup of a production job can in part be controlled remotely.

According to one embodiment, the control unit is configured to control the projection device to project light according to different illumination patterns for different production jobs which require different positions of the foil tape. Thus, different target positions for different machine setups can be indicated. Therefore, a fast setup of the machine is possible.

The projection device may project light such that the projected light indicates the position of an edge of the foil tape. Thereby, the projected picture may be particularly simple.

The projecting device is for example a beamer or a laser line projector. A beamer can indicate the position as well as the width of a foil tape, while a laser line projector indicates the position of an edge of the foil tape. Also, the beamer can project light in different colors. Thereby, the positions of different elements can be indicated. However, the resolution of an image projected by a laser line projector can be higher than the resolution of an image projected by a beamer.

According to one embodiment, the projection device is moveable in a direction transverse to the conveying direction of the foil tape. Thereby, the projection device is less sensitive to the altitude of the objects on which light is projected.

For example, the projection device is mounted on a linear guide and moveable along the guide, in particular by means of a linear motor.

In a further embodiment, the projection device is installed in a fixed position. In that case, the altitude of every element on which light is cast has to be known since the light is projected at an angle.

The foil tape conveying device may comprise at least one drive roller for conveying the foil tape and the foil tape conveying device may comprise at least one pressure roller configured to hold the foil tape in contact with the drive roller, wherein the projection device is configured to project a position marking on the drive roller that indicates the transverse target position of the pressure roller or of a carrier of the pressure roller. Thereby, the pressure roller can be aligned in the cardboard processing machine as well.

By using the pressure roller, the foil tape is prevented from lifting off the drive roller, ensuring continuous conveyance through the cardboard processing machine.

The position of the pressure roller can be shifted compared to the position of the foil tape such that a section of the pressure roller is in contact with the drive roller. Thereby, it is ensured that the pressure roller rotates synchronously with the drive roller and the pressure roller does not need a separate drive unit.

The cardboard processing machine may comprise a foil tape reel from which foil tape is unwound and fed into the cardboard processing machine, wherein the projection device is configured to project a position marking that indicates the transverse target position of the reel or of a carrier of the reel. Thereby, the position of the foil tape reel can be adjusted as well.

In an alternative embodiment, the reel can be positioned on an axis outside of the cardboard processing machine, and the axis together with the properly positioned reel can be mounted in the cardboard processing machine. In that case, an external projection device positioned, for example, at an assembly station can be used to position the reel on the axis.

The object is further achieved by a method for attaching a foil tape to a cardboard in a cardboard processing machine, wherein the cardboard processing machine comprises a cardboard conveying device, a foil tape conveying device, a pressing station, and at least one projection device that is installed above the foil tape conveying device.

In one method step, the projection device projects a position marking on the components of the foil tape conveying device that indicates the transverse target position of the foil tape before a new production job is started. The foil tape is aligned at the position marking. The alignment may be done manually by a user. In the pressing station, the foil tape is attached to the cardboard.

By means of the inventive method, as already discussed with respect to the inventive cardboard processing device, a simple solution for indicating a target position of the foil tape is provided.

The projection device is, for example, moved to at least two different positions in a direction transverse to the conveying direction of the foil tape, wherein the projection device indicates the target position of at least two different foil tapes at the different transverse positions. Thus, the target positions of different foil tapes can be indicated with high accuracy by only one projection device regardless of the height of the foil.

In case more than two foil tapes are used in the cardboard processing machine, the projection device can be moved to further positions.

According to one embodiment, illumination patterns for different production jobs are stored in a database, wherein, before a new production job is started, a specific illumination pattern assigned to the planned production job is sent to a control unit of the cardboard processing machine, and wherein the control unit controls the projection device to project light according to the received illumination pattern. Thus, the projection device can be controlled remotely. Also, the machine setup for a new production job can be particularly fast, as the change between two different illumination patterns can occur much faster than by means of exchangeable rulers.

The illumination patterns may comprise the necessary number of foil tapes, the width of the foil tapes, and/or the transverse position of the foil tapes. Thus, the illumination pattern not only helps to align the foil tapes in the correct position but also allows to check if the foil tape has the correct width or if the correct number of foil tapes has been entered in the cardboard processing machine.

By indicating the width of the foil tape, it can be indicated to a user which foil tape is to be driven by which feed shaft.

For example, advancement patterns for different production jobs are stored in the database, wherein, before a new production job is started, a specific advancement pattern assigned to the planned production job is sent to the control unit of the cardboard processing machine and the control unit controls a conveying speed of the foil tape accordingly.

More precisely, the control unit controls the rotation of the drive roller accordingly. An advancement pattern defines how the foil tape is advanced in the cardboard processing machine by the conveying device. By storing these advancement patterns in a database, they can be sent to the cardboard processing machine remotely, such that the setup of the cardboard processing machine is further simplified.

Further features and embodiments can be derived from the following description and the drawings. In the drawings.
- Figure 1 schematically shows an inventive cardboard processing machine,
- Figure 2 schematically shows a detailed view of a drive roller and a pressure roller mounted in the cardboard processing machine,
- Figure 3 shows a position marking projected by a projection device in the cardboard processing machine,
- Figure 4 shows a pattern of foil attached to a cardboard that has been processed in the cardboard processing machine,
- Figure 5 shows a foil tape passing over the cardboard in the pressing station, and
- Figure 6 shows a foil tape passing over the cardboard in the pressing station according to a different embodiment.

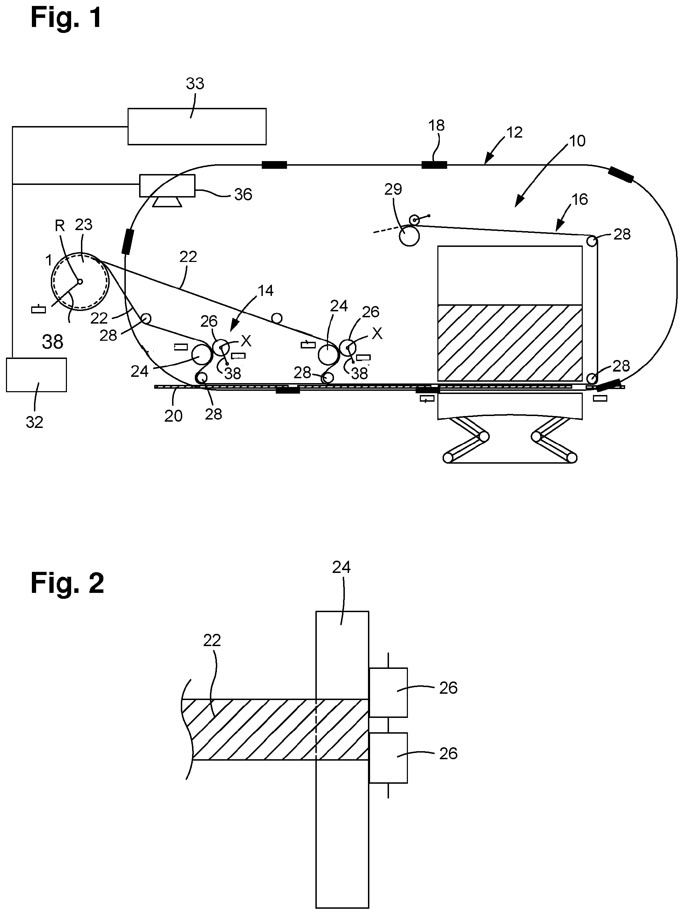

Figure 1 shows a cardboard processing machine 10.

The cardboard processing machine 10 comprises a cardboard conveying device 12, a foil tape conveying device 14, and a pressing station 16, which is, for example, a hot foil press.

The cardboard conveying device 12 is configured to convey cardboard such that it passes through the pressing station 16. For example, the cardboard conveying device 12 comprises grippers 18 that are configured to grab a cardboard blank 20 and move it along the conveying direction.

The foil tape conveying device 14 is configured to convey a foil tape 22 such that it passes through the pressing station 16 as well.

In the pressing station 16 the foil tape 22 is for example pressed onto a cardboard blank 20 by means of a stamp and at the same time heated up, such that the foil in the respective area is attached to the cardboard. Thereby, a metallization can be formed on the cardboard.

For example, the foil tape 22 has a carrier layer and a metallization layer, wherein the metallization layer is attached to the cardboard in the pressing station 16 and the carrier layer remains and is removed from the cardboard processing machine 10 as waste.

The foil tape 22 is unwound and fed into the cardboard processing machine 10 from a foil tape reel 23 that is mounted in the cardboard processing machine 10.

The foil tape conveying device 14 comprises at least one drive roller 24 for each strap of foil tape 22 that is conveyed in the cardboard processing machine 10. Upon rotation of the drive roller 24, the foil tape 22 progresses along the conveying direction.

In the embodiment illustrated in Figure 1, two straps of foil tape 22 are processed in the cardboard processing machine 10. For each foil tape 22, at least one drive roller 24 is provided.

The drive rollers 24 that are assigned to different foil tapes 22 are displaced with respect to each other. In other words, the foil tapes 22 are driven by different drive rollers 24 such that the different foil tapes 22 can be conveyed at different speeds.

At least one pressure roller 26 is assigned to each drive roller 24. The pressure rollers 26 are configured to hold the foil tape 22 in contact with the respective drive roller 24.

In the depicted embodiment, the pressure rollers 26 are provided in pairs. That means that two pressure rollers 26 are arranged next to each other (see Figure 2).

As it is illustrated in Figure 2, the position of the pressure rollers 26 is slightly displaced with respect to the position of the foil tape 22 to ensure that the pressure rollers 26 are with the drive roller 24. Thereby, the pressure rollers 26 are driven by the drive roller 24.

The pressure rollers 26 are respectively mounted on an axis x that is fixed in the cardboard processing machine 10.

Furthermore, the foil tape conveying device 14 comprises a return axle 28. This axle may also be implemented as a roller.

At an exit of the cardboard processing machine 10 a tensioning shaft 29 is provided.

The cardboard processing machine 10 comprises a control unit 32.

The control unit 32 is connected to a database 33.

The cardboard processing machine 10 further comprises a projection device 36, which is arranged above the foil tape conveying device 14. The projection device 36 is a beamer or a laser line projector.

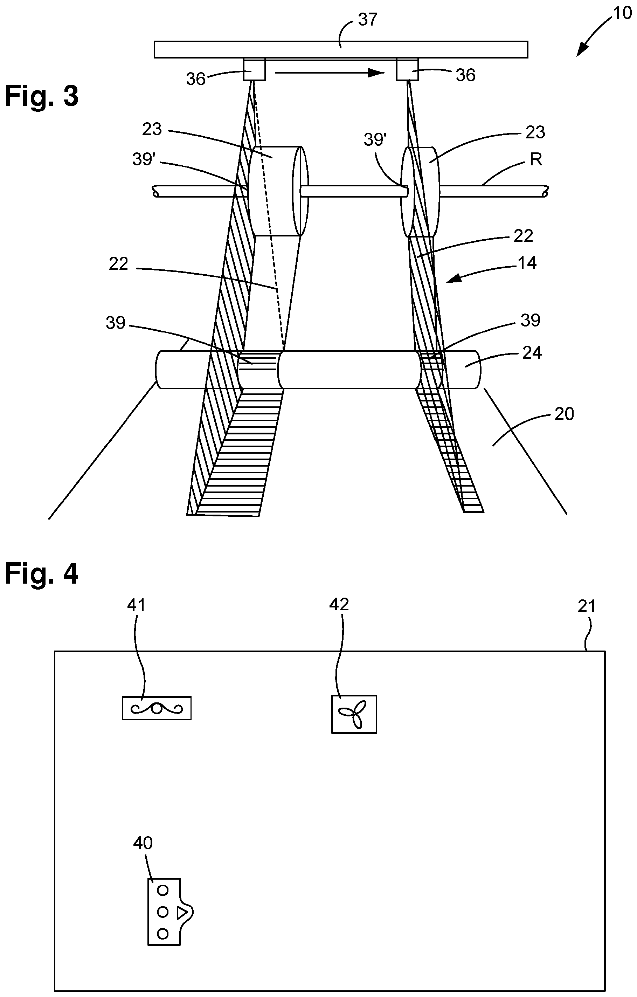

The projection device 36 is moveable in a direction transverse to the conveying direction of the foil tape 22, as depicted in Figure 3.

In particular, Figure 3 shows the projection device 36 in two different positions, wherein the projection device 36 indicates the target position of a different foil tape 22 in each position.

In the depicted embodiment, the projection device 36 is moveable along a guide rail 37.

By means of the projection device 36, the target position of different elements in the cardboard processing machine 10 can be indicated, as will become clear from the following description.

In particular, the control unit 32 is configured to control the projection device 36 to project a position marking 39 on the components of the foil tape conveying device 14 that indicates the transverse target position of the foil tape 22. More precisely, the projection device 36 projects a position marking 39 on the drive rollers 24 do indicate a target position of the foil tape 22.

However, as illustrated in Figure 3, the path of the foil tape 22 can be indicated beyond the drive roller 24. For example, the path of the foil tape 22 can be indicated along the cardboard blanks 20.

Furthermore, the control unit 32 is configured to control the projection device 36 to project a position marking on the drive roller 24 that indicates the transverse target position of the pressure roller 26 or of a carrier 27 of the pressure roller 26. However, the pressure rollers 26 and the respective position marking are not shown in Figure 3 for reasons of simplicity.

Also, the control unit 32 is configured to control the projection device 36 to project a position marking 39' that indicates the transverse target position of the reel 23 or of a carrier 38 of the reel 23.

When using a beamer as projector device 36, the position marking can be implemented by projecting an image of the element configured to guide the foil tape, for example an image of the carrier 38 of the reel to position the carrier 38 of the reel, at the position where said carrier should be located. Equivalently, the beamer may be used to project an image of the pressure rollers 26 at the position where the pressure roller 26 should be placed.

Thus, by means of the projection device 36, the reel 23, the pressure roller 26 and the foil tape 22 can be properly aligned in the cardboard processing machine.

The control unit 32 is also configured to control the movement of the projection device 36 along the guide rail 37.

For example, the control unit 32 is configured to move the projection device 36 in a different position along the guide rail 37 to indicate the target position of the foil tapes 22, the reels 23, and/or the pressure rollers 26 respectively the carriers 27, 38 of the pressure rollers 26 or the reel 23 (i.e., the elements configured to guide the foild tape). In other words, the projection device 36 is moved to a different position to indicate the target position of different elements.

However, it is also possible that the projection device 36 is fixed and that the projection device 36 projects a picture that contains position markings for all of the different elements.

To ensure a high flexibility of the cardboard processing machine 10, the control unit 32 is configured control the projection device 36 to project light according to different illumination patterns for different production jobs which require different positions of the foil tape 22.

When setting up the cardboard processing machine 10 for a new production job, the projection device 36 projects a position marking on the components of the foil tape conveying device 14 that indicates the transverse target position of at least one foil tape before the new production job is started, and the foil tape 22 is aligned at the position marking accordingly.

As described above, the target positions for the reel 23 and the pressure rollers 26 are indicated as well.

After the setup is finished and the cardboard processing machine 10 is started again, the foil tape 22 is attached to the cardboard in the pressing station 16.

Figure 4 shows a cardboard 21 with an exemplary metallization pattern that is formed in the pressing station 16 by connecting the foil tape 22 to the cardboard 21.

The metallization pattern has three segments 40, 41, 42, wherein two segments 41, 42 are arranged in the same row, i.e., at the same transverse position.

To produce the depicted metallization pattern two different foil tapes 22 are necessary that are guided at different positions in the cardboard processing machine 10.

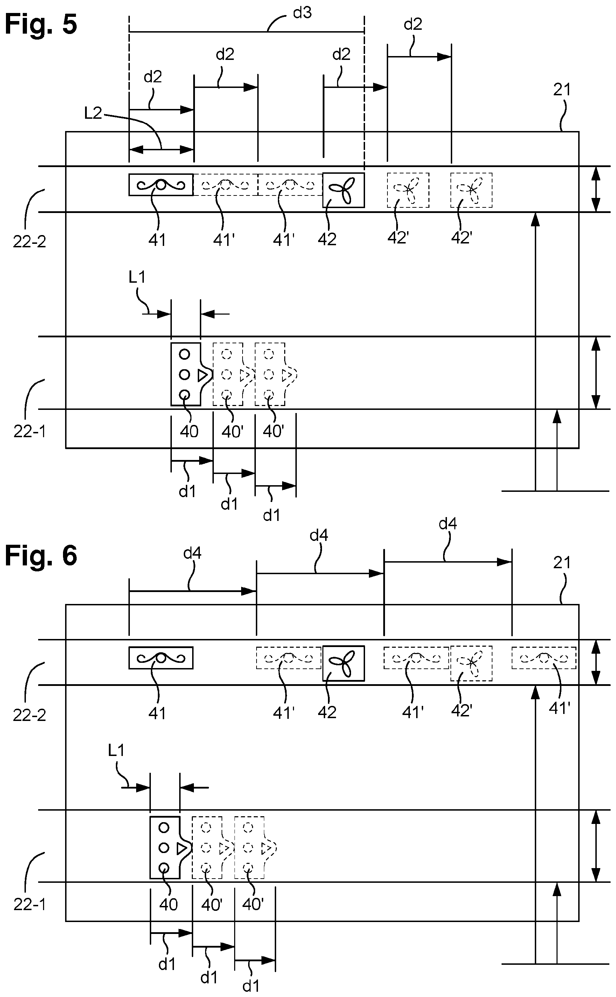

In particular, two of the segments 41, 42 are formed by means of the same foil tape 22, as becomes clearer from Figures 5 and 6, in which the position of the two foil tapes 22-1, 22-2 with respect to the cardboard 21 is depicted.

An advancement scheme of the foil tapes 22-1, 22-2 is explained with reference to Figures 5 and 6.

The foil tapes 22-1, 22-2 are not conveyed with a constant speed, but are stopped each time a segment of the respective foil tape 22-1, 22-2 is attached to the cardboard 21 in the pressing station 16 and afterward moved forward by a defined extend for the next pressing step.

The first segment 40 is produced from a first foil tape 22-1. As the first segment is the only segment 40 that is made from the first foil tape 22-1, the first foil tape 22-1 is moved forward about a regular distance d1 in each step. The distance d1 is slightly bigger than the length L1 of the first segment 40.

For better understanding, the used sections 40' of the foil tape 22-2 are visualized by depicting the form of the respective segment that has been produced by means of the foil tape 22 with lighter outlines than the actual segment formed on the cardboard 21.

The second segment 41 and the third segment 42 are made from the second foil tape 22-2.

In that case, there are two possible solutions to advance the foil tape 22-2.

The first solution is explained with reference to Figure 5.

In the first step, the second segment 41 and the third segment 42 are formed while the cardboard 21 and the second foil tape 22-2 are stopped in the pressing station.

Then, the second foil tape 22-2 is moved forward by a distance d2 that is slightly bigger than the length L2 of the segment with the bigger length, which is the second segment 41 in the depicted embodiment.

This step is repeated until the section 41' of used foil tape reaches the area where the third segment 42 is formed in the pressing station 16. In particular, it has to be avoided that a pressing operation is made with an already used foil section because in that case the respective segment would not be materialized on the cardboard 21.

The number of steps that can be performed until the used foil tape reaches the area where the third segment 42 is formed depends on the distance between the first and the second segment and the width of the segments.

Once the section 41' of the used foil tape reaches the area where the third segment 42 is formed, the foil tape 22-2 is moved forward by a distance d3, which corresponds to the distance between two opposed ends of the second and the third segment 41, 42.

Then, the aforementioned steps are repeated.

Figure 6 visualizes an alternative solution to advance the foil tape 22-2.

In particular, according to the solution visualized in Figure 6, the foil tape 22-2 is advanced about the same distance d4 in each step. In other words, the foil tape 22-2 is advanced according to a regular advancement scheme.

A respective advancement scheme is achieved by respectively controlling the drive rollers 24.

Since the foil tapes 22-1, 22-2 are advanced according to different advance schemes, each of the first and second foil tape 22-1, 22-1 is advanced by means of a separate drive roller 24 designated to the respective foil tape 22-1, 22-2.

In comparison to the solution described in Figure 5, the solution described in Figure 6 has the advantage that the processing speed can be higher because of the regular advancement and because the distance d4 is shorter than the distance d3. On the other hand, with the advancement scheme described with reference to Figure 6 the foil tape 22-2 is not used as efficiently as with the advancement scheme described with reference to Figure 5, i.e. more waste is produced and thus the material costs are higher.

For example, different advancement schemes and/or operation speeds can be saved in the database 33 for each production job from which an operator can choose.

It is also possible that an operator can choose a number of foil tapes for a production job based on the number of available drive rollers 24.

The possible options may be displayed on a human-machine interface such as a display of the cardboard processing machine 10.

The respective information can be sent to the cardboard processing machine 10 remotely.

## Claims

1. A cardboard processing machine (10) comprising a cardboard conveying device (12), a foil tape conveying device (14) and a pressing station (16), wherein
the cardboard conveying device (12) is configured to convey cardboard such that it passes through the pressing station (16) and the foil tape conveying device (14) is configured to convey a foil tape (22) such that it passes through the pressing station (16), wherein the pressing station (16) is configured to press foil tape (22) onto the cardboard such that a metal layer of the foil tape (22) is attached to the cardboard, **characterised in that**
the cardboard processing machine (10) comprises at least one projection device (36) that is arranged above the foil tape conveying device (14), and wherein the cardboard processing machine (10) comprises a control unit (32) that is configured to control the projection device (36) to project a position marking (39) on the components of the foil tape conveying device (14) that indicates the transverse target position of the foil tape (22) or the transverse position of any element (23,26,27,38) that guides the foil tape (22).

2. The cardboard processing machine (10) according to claim 1, wherein the control unit (32) is configured to control the projection device (36) to project light according to different illumination patterns for different production jobs which require different positions of the foil tape (22).

3. The cardboard processing machine (10) according to claim 1 or 2, wherein the projection device (36) projects light such that the projected light indicates the position of an edge of the foil tape (22).

4. The cardboard processing machine (10) according to any of the preceding claims, wherein the projection projects device (36) is a beamer or a laser line projector.

5. The cardboard processing machine (10) according to any of the preceding claims, wherein the projection device (36) is moveable in a direction transverse to the conveying direction of the foil tape (22).

6. The cardboard processing machine (10) according to any of the preceding claims, wherein the foil tape conveying device (14) comprises at least one drive roller (24) for conveying the foil tape (22) and wherein the foil tape conveying device (14) comprises at least one pressure roller (26) configured to hold the foil tape (22) in contact with the drive roller (24), wherein the projection device (36) is configured to project a position marking on the drive roller (24) that indicates the transverse target position of the pressure roller (26) or of a carrier (27) of the pressure roller (26).

7. The cardboard processing machine (10) according to any of the preceding claims, wherein the cardboard processing machine (10) comprises a foil tape reel (23) from which foil tape (22) is unwound and fed into the cardboard processing machine (10), wherein the projection device (36) is configured to project a position marking (39') that indicates the transverse target position of the reel (23) or of a carrier (38) of the reel.

8. A method for attaching metal from a foil tape (22) to a cardboard in a cardboard processing machine (10), wherein the cardboard processing machine (10) comprises a cardboard conveying device (12), a foil tape conveying device (14), a pressing station (16) and at least one projection device (36) that is installed above the foil tape conveying device (14), the method comprising the following steps:
- before a new production job is started, the projection device (36) projects a position marking (39) on the components of the foil tape conveying device (14) that indicates the transverse target position of the foil tape (22) or the target position of any element (23,26,27,38) that guides the foil tape,
- the foil tape (22) or, respectively, the element guiding the foil tape is aligned at the position marking, and
- metal from the foil tape (22) is attached to the cardboard in the pressing station (16).

9. The method according to claim 8, wherein the projection device (36) is moved to at least two different positions in a direction transverse to the conveying direction of the foil tape (22), wherein the projection device (36) indicates the target position of at least two different foil tapes (22) at the different transverse positions.

10. The method according to claim 8 or 9, wherein illumination patterns for different production jobs are stored in a database (33), wherein, before a new production job is started, a specific illumination pattern assigned to the planned production job is sent to a control unit (32) of the cardboard processing machine (10), and wherein the control unit (32) controls the projection device (36) to project light according to the received illumination pattern.

11. The method according to any of claims 8 to 10, wherein advancement patterns for different production jobs are stored in a database (33), wherein, before a new production job is started, a specific advancement pattern assigned to the planned production job is sent to the control unit (32) of the cardboard processing machine (10) and the control unit (32) controls a conveying speed of the foil tape (22) accordingly.

## Patentansprüche

1. Kartonverarbeitungsmaschine (10), umfassend eine Kartonfördervorrichtung (12), eine Folienbandfördervorrichtung (14) und eine Pressstation (16), wobei
die Kartonfördervorrichtung (12) konfiguriert ist, um Karton zu fördern, sodass er durch die Pressstation (16) verläuft, und die Folienbandfördervorrichtung (14) konfiguriert ist, um ein Folienband (22) zu fördern, sodass es durch die Pressstation (16) verläuft, wobei die Pressstation (16) konfiguriert ist, um das Folienband (22) auf den Karton zu pressen, sodass eine Metallschicht des Folienbandes (22) an dem Karton befestigt wird, **dadurch gekennzeichnet, dass**
die Kartonverarbeitungsmaschine (10) mindestens eine Projektionsvorrichtung (36) umfasst, die oberhalb der Folienbandfördervorrichtung (14) angeordnet ist, und wobei die Kartonverarbeitungsmaschine (10) eine Steuereinheit (32) umfasst, die konfiguriert ist, um die Projektionsvorrichtung (36) zu steuern, um eine Positionsmarkierung (39) auf die Komponenten der Folienbandfördervorrichtung (14) zu projizieren, welche die quer gerichtete Zielposition des Folienbandes (22) oder die quer gerichtete Position eines beliebigen Elements (23, 26, 27, 38), welches das Folienband (22) leitet, angibt.

2. Kartonverarbeitungsmaschine (10) nach Anspruch 1, wobei die Steuereinheit (32) konfiguriert ist, um die Projektionsvorrichtung (36) zu steuern, um Licht entsprechend unterschiedlicher Beleuchtungsmuster für verschiedene Produktionsaufträge zu projizieren, die unterschiedliche Positionen des Folienbandes (22) erfordern.

3. Kartonverarbeitungsmaschine (10) nach Anspruch 1 oder 2, wobei die Projektionsvorrichtung (36) Licht projiziert, sodass das projizierte Licht die Position einer Kante des Folienbandes (22) angibt.

4. Kartonverarbeitungsmaschine (10) nach einem der vorstehenden Ansprüche, wobei die Projektionsvorrichtung (36) ein Beamer oder ein Laserlinienprojektor ist.

5. Kartonverarbeitungsmaschine (10) nach einem der vorstehenden Ansprüche, wobei die Projektionsvorrichtung (36) in einer Richtung quer zur Förderrichtung des Folienbandes (22) beweglich ist.

6. Kartonverarbeitungsmaschine (10) nach einem der vorstehenden Ansprüche, wobei die Folienbandfördervorrichtung (14) mindestens eine Antriebswalze (24) zum Fördern des Folienbandes (22) umfasst und wobei die Folienbandfördervorrichtung (14) mindestens eine Druckwalze (26) umfasst, die konfiguriert ist, um das Folienband (22) in Kontakt mit der Antriebswalze (24) zu halten, wobei die Projektionsvorrichtung (36) konfiguriert ist, um eine Positionsmarkierung auf die Antriebswalze (24) zu projizieren, welche die quer gerichtete Zielposition der Druckwalze (26) oder eines Trägers (27) der Druckwalze (26) angibt.

7. Kartonverarbeitungsmaschine (10) nach einem der vorstehenden Ansprüche, wobei die Kartonverarbeitungsmaschine (10) eine Folienbandspule (23) umfasst, von der Folienband (22) abgewickelt und der Kartonverarbeitungsmaschine (10) zugeführt wird, wobei die Projektionsvorrichtung (36) konfiguriert ist, um eine Positionsmarkierung (39') zu projizieren, welche die quer gerichtete Zielposition der Spule (23) oder eines Trägers (38) der Spule angibt.

8. Verfahren zum Befestigen von Metall von einem Folienband (22) an einem Karton in einer Kartonverarbeitungsmaschine (10), wobei die Kartonverarbeitungsmaschine (10) eine Kartonfördervorrichtung (12), eine Folienbandfördervorrichtung (14), eine Pressstation (16) und mindestens eine Projektionsvorrichtung (36) umfasst, die über der Folienbandfördervorrichtung (14) installiert ist, wobei das Verfahren die folgenden Schritte umfasst:
- bevor ein neuer Produktionsauftrag gestartet wird, projiziert die Projektionsvorrichtung (36) eine Positionsmarkierung (39) auf die Komponenten der Folienbandfördervorrichtung (14), welche die quer gerichtete Zielposition des Folienbandes (22) oder die Zielposition eines beliebigen Elements (23, 26, 27, 38), welches das Folienband leitet, angibt.
- das Folienband (22) oder jeweils das Element, welches das Folienband leitet, ist an der Positionsmarkierung ausgerichtet, und
- Metall vom Folienband (22) wird in der Pressstation (16) an dem Karton befestigt.

9. Verfahren nach Anspruch 8, wobei die Projektionsvorrichtung (36) in einer Richtung quer zur Förderrichtung des Folienbandes (22) an mindestens zwei verschiedene Positionen bewegt wird wobei die Projektionsvorrichtung (36) die Zielposition von mindestens zwei verschiedenen Folienbändern (22) an den verschiedenen Querpositionen angibt.

10. Verfahren nach Anspruch 8 oder 9, wobei Beleuchtungsmuster für verschiedene Produktionsaufträge in einer Datenbank (33) gespeichert sind, wobei bevor ein neuer Produktionsauftrag gestartet wird, ein dem geplanten Produktionsauftrag zugeordnetes spezifisches Beleuchtungsmuster an eine Steuereinheit (32) der Kartonverarbeitungsmaschine (10) gesendet wird und wobei die Steuereinheit (32) die Projektionsvorrichtung (36) steuert, um Licht entsprechend dem empfangenen Beleuchtungsmuster zu projizieren.

11. Verfahren nach einem der Ansprüche 8 bis 10, wobei Vorschubmuster für verschiedene Produktionsaufträge in einer Datenbank (33) gespeichert sind, wobei bevor ein neuer Produktionsauftrag gestartet wird, ein dem geplanten Produktionsauftrag zugeordnetes spezifisches Vorschubmuster an die Steuereinheit (32) der Kartonverarbeitungsmaschine (10) gesendet wird und die Steuereinheit (32) dementsprechend eine Fördergeschwindigkeit des Folienbandes (22) steuert.

## Revendications

1. Machine de traitement de carton (10) comprenant un dispositif de convoyage de carton (12), un dispositif de convoyage de bande métallisée (14) et une station de pressage (16), dans laquelle
le dispositif de convoyage de carton (12) est configuré pour convoyer le carton de manière à ce qu'il traverse la station de pressage (16), et le dispositif de convoyage de bande métallisée (14) est configuré pour convoyer une bande métallisée (22) de sorte qu'il traverse la station de pressage (16), dans laquelle la station de pressage (16) est configurée pour presser le bande métallisée (22) sur le carton de sorte qu'une couche métallique de la bande métallisée (22) soit fixée au carton, **caractérisée en ce que**
la machine de traitement de carton (10) comprend au moins un dispositif de projection (36) qui est disposé au-dessus du dispositif de convoyage de bande métallisée (14), et dans laquelle la machine de traitement de carton (10) comprend une unité de commande (32) qui est configurée pour commander au dispositif de projection (36) de projeter un marquage de position (39) sur les composants du dispositif de convoyage de bande métallisée (14) qui indique la position cible transversale de la bande métallisée (22) ou la position transversale de tout élément (23, 26, 27, 38) qui guide la bande métallisée (22).

2. Machine de traitement de carton (10) selon la revendication 1, dans laquelle l'unité de commande (32) est configurée pour commander au dispositif de projection (36) de projeter de la lumière selon différents modèles d'éclairage pour différentes tâches de production qui nécessitent différentes positions de la bande métallisée (22).

3. Machine de traitement de carton (10) selon la revendication 1 ou 2, dans laquelle le dispositif de projection (36) projette de la lumière de sorte que la lumière projetée indique la position d'un bord de la bande métallisée (22).

4. Machine de traitement de carton (10) selon l'une quelconque des revendications précédentes, dans laquelle le dispositif de projection (36) est un vidéoprojecteur ou un projecteur de ligne laser.

5. Machine de traitement de carton (10) selon l'une quelconque des revendications précédentes, dans laquelle le dispositif de projection (36) est mobile dans une direction transversale à la direction de convoyage de la bande métallisée (22).

6. Machine de traitement de carton (10) selon l'une quelconque des revendications précédentes, dans laquelle le dispositif de convoyage de bande métallisée (14) comprend au moins un rouleau d'entraînement (24) pour convoyer la bande métallisée (22) et dans laquelle le dispositif de convoyage de bande métallisée (14) comprend au moins un rouleau de pression (26) configuré pour maintenir la bande métallisée (22) en contact avec le rouleau d'entraînement (24), dans laquelle le dispositif de projection (36) est configuré pour projeter un marquage de position sur le rouleau d'entraînement (24) qui indique la position cible transversale du rouleau de pression (26) ou d'un support (27) du rouleau de pression (26).

7. Machine de traitement de carton (10) selon l'une quelconque des revendications précédentes, dans laquelle la machine de traitement de carton (10) comprend une bobine de bande métallisée (23) à partir de laquelle une bande métallisée (22) est déroulé et introduit dans la machine de traitement de carton (10), dans laquelle le dispositif de projection (36) est configuré pour projeter un marquage de position (39') qui indique la position cible transversale de la bobine (23) ou d'un support (38) de la bobine.

8. Procédé de fixation de métal provenant d'une bande métallisée (22) à un carton dans une machine de traitement de carton (10), dans lequel la machine de traitement de carton (10) comprend un dispositif de convoyage de carton (12), un dispositif de convoyage de bande métallisée (14), une station de pressage (16) et au moins un dispositif de projection (36) qui est installé au-dessus du dispositif de convoyage de bande métallisée (14), le procédé comprenant les étapes suivantes :
- avant le démarrage d'une nouvelle tâche de production, le dispositif de projection (36) projette un marquage de position (39) sur les composants du dispositif de convoyage de bande métallisée (14) qui indique la position cible transversale de la bande métallisée (22) ou la position cible de tout élément (23,26,27,38) qui guide la bande métallisée,
- le bande métallisée (22) ou, respectivement, l'élément guidant le bande métallisée est aligné sur le marquage de position, et
- le métal de la bande métallisée (22) est fixé au carton dans la station de pressage (16).

9. Procédé selon la revendication 8, dans lequel le dispositif de projection (36) est déplacé vers au moins deux positions différentes dans une direction transversale à la direction de convoyage de la bande métallisée (22), dans lequel le dispositif de projection (36) indique la position cible d'au moins deux bandes métallisées différents (22) aux différentes positions transversales.

10. Procédé selon la revendication 8 ou 9, dans lequel les modèles d'éclairage pour différentes tâches de production sont stockés dans une base de données (33), dans lequel avant le démarrage d'une nouvelle tâche de production, un modèle d'éclairage spécifique attribué à la tâche de production prévue est envoyé à une unité de commande (32) de la machine de traitement de carton (10), et dans lequel l'unité de commande (32) commande au dispositif de projection (36) de projeter de la lumière selon le modèle d'éclairage reçu.

11. Procédé selon l'une quelconque des revendications 8 à 10, dans lequel les modèles d'avancement pour différentes tâches de production sont stockés dans une base de données (33), dans lequel avant le démarrage d'une nouvelle tâche de production, un modèle d'avancement spécifique attribué à la tâche de production prévue est envoyé à l'unité de commande (32) de la machine de traitement de carton (10) et l'unité de commande (32) commande en conséquence une vitesse de convoyage de la bande métallisée (22).
